**Europäisches Patentamt**

**European Patent Office**

**Office européen des brevets**

(11) Publication number: **0 092 312**
**B1**

(12) **EUROPEAN PATENT SPECIFICATION**

(45) Date of publication of patent specification: **18.07.90**

(21) Application number: **83301348.5**

(22) Date of filing: **11.03.83**

(51) Int. Cl.⁵: **G 05 B 19/04**

(54) **Method and apparatus for displaying ladder diagrams.**

(30) Priority: **11.03.82 JP 38569/82**

(43) Date of publication of application:
**26.10.83 Bulletin 83/43**

(45) Publication of the grant of the patent:
**18.07.90 Bulletin 90/29**

(84) Designated Contracting States:
**DE FR GB**

(56) References cited:
**FR-A-2 473 766**
**US-A-3 944 984**
**US-A-3 964 026**
**US-A-4 038 533**

**"IBM Technical Disclosure Bulletin" (1978),
pages 836-837**

(73) Proprietor: **FANUC LTD**
**3580, Shibokusa Aza-Komanba Oshino-mura
Minamitsuru-gun Yamanashi 401-05 (JP)**

(72) Inventor: **Komiya, Hidetsugu
1-17-20 Asahigaoka
Hino-shi, Tokyo (JP)**
Inventor: **Isobe, Shinichi
Hinodai-Haitsu 516 1-1-1 , Hinodai
Hino-shi, Tokyo (JP)**
Inventor: **Sawada, Kazuo
Ikeda-Sou, 5-17-11 Tamadaira
Hino-shi, Tokyo (JP)**

(74) Representative: **Billington, Lawrence Emlyn
et al
HASELTINE LAKE & CO Hazlitt House 28
Southampton Buildings Chancery Lane
London WC2A 1AT (GB)**

Courier Press, Leamington Spa, England.

## Description

This invention relates to a method of and apparatus for displaying a ladder diagram and, more particularly, to such method and apparatus for facilitating an understanding of programmable sequence controller processing during debugging or maintenance, and for facilitating such debugging or maintenance.

Numerical control systems permit various mechanical elements in maching tools to be controlled on the basis of commands issued by a numerical control device which incorporates an operator's panel. In such numerical control systems a hardwired switch network or so-called "magnetics" unit comprising a multiplicity of relays is connected between the numerical control device, commonly referred to as an NC device, and the machine tool. Prescribed ones of these relays are actuated in response to the commands issued by the NC device, whereby the prescribed elements of the machine tool are caused to operate in the manner specified by the commands. These commands may be entered directly from the operator's panel, or may be generated in response to programmed M-function and S-function instructions. Disadvantages encountered in the conventional systems of the above type are the large size of the apparatus and the high cost entailed by the large number of relays, as well as poor reliability attributed to mechanical failure of the relays.

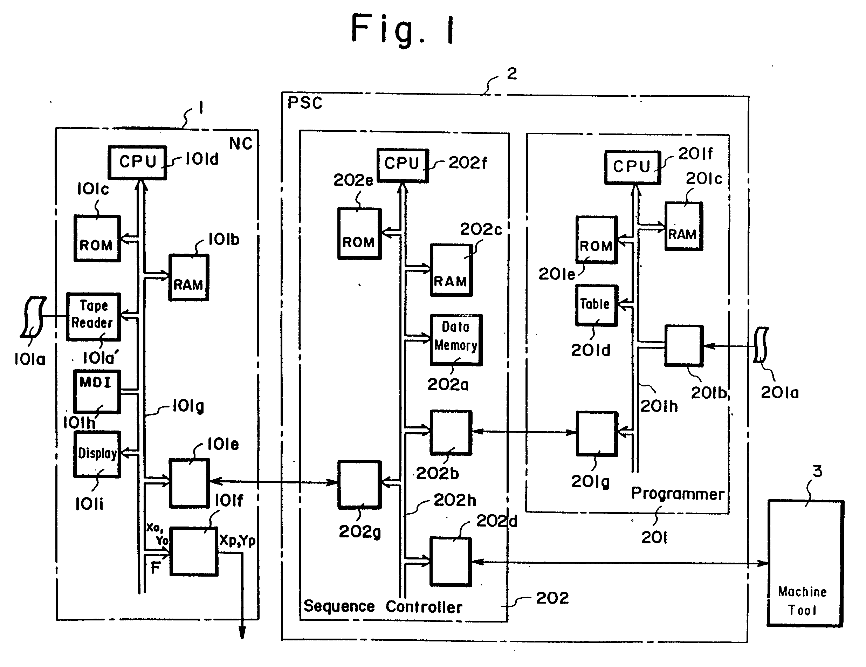

In view of the foregoing disadvantages, sequence controllers, also known as programmable sequence controllers, are now the most widely used means for performing, through program processing, the function of the magnetics unit. A programmable sequence controller (referred to hereinafter as a PSC) according to the prior art is illustrated in Fig. 1. Numeral 1 denotes a numerical control device, 2 the conventional PSC installed separately of the numerical control device 1, and 3 a machine tool. The numerical control device includes a paper tape 101a bearing machining commands in punched form, a paper tape reader 101a' for reading the paper tape, a random access memory (RAM) 101b for storing the machining commands read in from the paper tape 101a, a read-only memory (ROM) 101 storing a control program for controlling the numerical control device 1, a central processing unit (CPU) 101d for executing processing in accordance with a machining command program or the control program, a transceiver unit 101e, such as a direct memory access controller, for the purpose of sending data to and receiving data from the sequence controller 2, and an arithmetic circuit 101f comprising a so-called pulse distributing circuit which receives as inputs thereto signals indicative of amounts of movement $X_o$, $Y_o$ along the X and Y axes, respectively, and a signal indicative of fast speed F, for producing distributed pulses $X_p$, $Y_p$ by performing a well-known arithmetic pulse distribution operation based on these signal inputs. The numerical control device 1 also includes a manual data input unit (MDI) 101h that is mounted on the operator's panel of the numerical control device 1 for entering single blocks of machining command data when, say, adding to or modifying such data. Also provided is a universal display unit 101i for displaying, e.g., the present position of a tool or the like. Note that the display unit and MDI may be constructed as a single unit. The aforementioned units are interconnected by a bus line 101g.

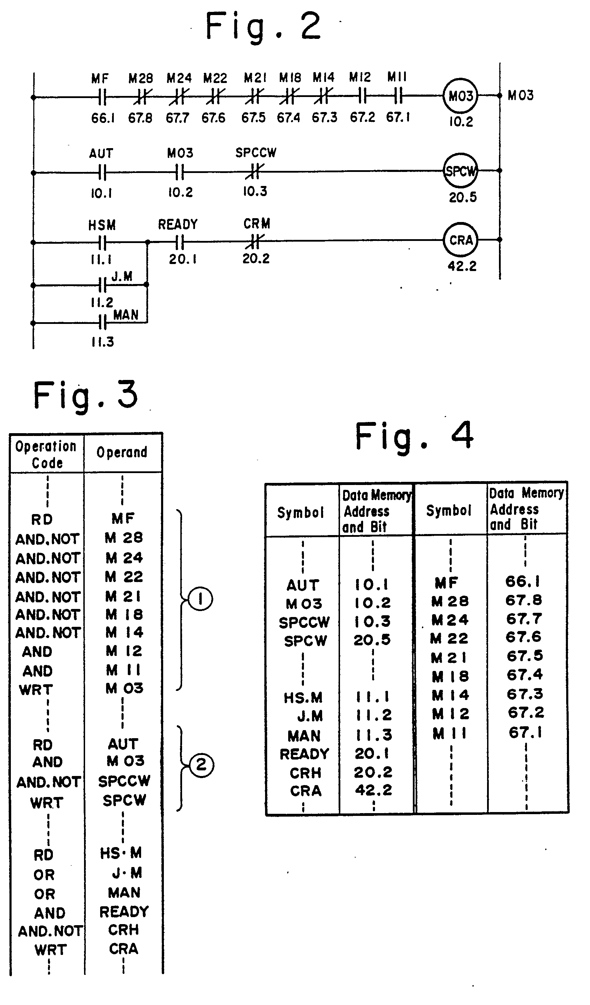

The PSC 2 comprises a programmer 201 for converting an entered sequence program into machine language and for correcting the sequence program, and a sequence controller cabinet 202. The programmer 201 includes a paper tape 201a bearing a correspondence table (described below) and a sequence program in punched form, a paper tape reader 201b for reading the paper tape 201a, and a random access memory (RAM) 201c for storing the sequence program. A sequence program performs the function of a magnetics unit, expressing the function thereof in logical form using operation codes and operands which make up a program. By way of example, a ladder diagram constituting part of the magnetics unit shown in Fig. 2 may be programmed as depicted in Fig. 3. In Fig. 3, the operation codes in the sequence program are given by RD, AND, WRT, OR, AND NOT and so on. RD is a read operation instruction, AND a logical product instruction, WRT a write operation instruction, OR a logical sum instruction, and AND NOT an instruction for logical multiplication with a negated value. Further, MF, M28, . . ., AUT, M03 . . . represent the operands of the sequence program and correspond to prescribed addresses and prescribed bits in a data memory 202a, described below, located within the sequence controller cabinet 202. The PSC 2, based on the group of instructions (1) shown in Fig. 3, executes the following logical operation:

$$\text{MF } \overline{\text{M28}}\ \overline{\text{M24}}\ \overline{\text{M22}}\ \overline{\text{M21}}\ \overline{\text{M18}}\ \overline{\text{M14}}\ \text{M12 M11}$$

and plants the result of the operation (either logical "1" or logical "0") in the data memory 202a at the prescribed bit of the prescribed address corresponding to operand M03. The PSC 2 also executes the following logical operation based on the group of instructions (2):

$$\text{AUT M03 } \overline{\text{SPCCW}}$$

and plants the result of the operation ("1" or "0") in the data memory 202a at the prescribed bit of the prescribed address designated by the operand SPCW.

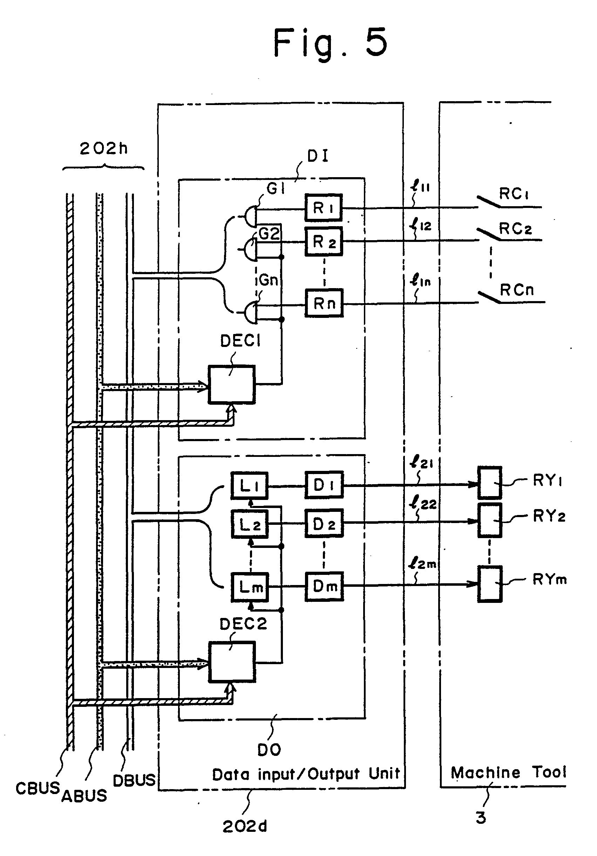

Returning to Fig. 1, the programmer 201 further includes a correspondence table 201d for storing the corresponding relationships between the symbols MF, AUT . . . constituting the operands of the sequence program, and storage locations of the data memory 202a. An example of what is stored in the correspondence table is illustrated in Fig. 4. It will be seen that the symbol AUT corresponds to the first bit of the tenth address of the data memory 10, that symbol M03 corresponds to the second bit of the tenth address, and likewise through symbol CRA, which corresponds to the second bit of the 42nd address. The ladder diagram of Fig. 2 also shows the symbols matched with the corresponding storage locations. The programmer 201 is also provided with a read-only memory (ROM) 201e for storing, e.g., a control program for controlling the overall programmer 201, as well as a language translator program for translating the sequence program read in from the paper tape 201a into machine language. The programmer 201 further comprises a central processing unit (CPU) 201f for executing, e.g., translation and correction of the sequence program in accordance with the program stored in the ROM 201e, and a transceiving unit 201g having a buffer or the like for sending data to and receiving data from the sequence controller cabinet 202. The foregoing units constituting the programmer 201 are interconnected by a bus line 201h.

The sequence controller cabinet 202 includes the data memory 202a mentioned above. The data memory 202a establishes correspondence between each relay of the magnetics unit shown in Fig. 2 and a single bit, the on/off (closed/open) state of a relay being represented by logical "1" or logical "0", respectively, in the corresponding bit. For example, assume that the operator places the system in the automatic mode using the operator's panel. With a magnetics unit, the relay AUT in the power sequence circuit would be placed in the ON state. With the PSC, however, logical "1" is stored in the first bit of the tenth address in data memory 202a. The sequence controller cabinet 202 also includes a transceiving unit 202b having a buffer or the like for supervising the transmission and reception of data with the programmer 201, a RAM 202c for storing the sequence program translated into machine language by the programmer 201, a data input/output unit 202d for supervising the transmission and reception of data with the machine tool 3, a ROM 202e for storing the control program which controls the overall sequence controller cabinet 202, a central processing unit 202f for executing prescribed sequence processing in accordance with the control program and sequence program, and a transceiving unit 202g for sending data to and receiving data from the numerical control device 1. The units constituting the sequence controller cabinet 202 are interconnected by a bus line 202h.

Fig. 5 is a block diagram showing the data input/output unit 202d in greater detail. The data input/output unit 202d comprises a data input circuit DI and a data output circuit DO. The data input circuit DI includes receivers $R_l$ through $R_n$ which receive signals from various limit switches and relay contacts $RC_l$ through $RC_n$ delivered from the machine side on cables $I_{11}$ through $I_{1n}$, AND gates $G_l$ through $G_n$ receiving the outputs of the respective receivers $R_l$ through $R_n$, and a decoder

$DEC_1$ which decodes address signals received from an address bus ABUS to open predetermined ones of the AND gates, the AND gate output being sent out on the data bus DBUS. The data output circuit DO includes flip-flops (or latch circuits if desired) $L_l$ through $L_m$ for storing such signals as forward and reverse spindle rotation signals obtained from the machine tool 3, drivers $D_l$ through $D_m$ provided for corresponding ones of the flip-flops (flip-flop will be abbreviated to FF hereinafter) $L_1$ through $L_m$ for delivering the output signals from the FFs to the machine tool 3 via cables $I_{21}$ through $I_{2m}$ to actuate the relays $Ry_l$ through $Ry_m$, and a decoder $DEC_2$ which decodes address signals received from the address bus ABUS to place predetermined ones of the FFs in a settable or resettable state, and which stores in predetermined FFs the data received from the data bus DBUS. In addition to the buses ABUS and DBUS, a control signal bus CBUS is provided for sending and receiving control signals. The abovementioned cables $I_{11}$ through $I_{1n}$ and $I_{21}$ through $I_{2m}$ interconnect the data input/output unit 202d and the machine tool so that data may be sent and received between them.

The PSC 2 operates in the following manner. First, a table showing the correspondence between symbols and storage locations is prepared while referring to the ladder diagram (Fig. 2) of magnetics circuit, and the table is punched in a paper tape. A sequence program also is prepared in the above-described manner using operation codes and symbols (operands) and is similarly punched into the paper tape 201a. Next, the punched tape 201a is read by the paper tape reader 201b to store the correspondence table in table 201d and the sequence program in the RAM 201c. When the foregoing has been accomplished the PSC 2 starts executing the language processing program stored in the ROM 201e, reads the instructions in the sequence program out of the RAM 201c in successive fashion and converts the operation codes and operands into machine language. The PSC uses the correspondence table to convert each operand into the machine word representing the prescribed address and bit of the data memory 202a. The sequence program converted into these machine words is transferred to and stored in the RAM 202c through the transceiver unit 201g of the programmer 201 and the transceiver unit 202b of the sequence controller cabinet 202. The programmable sequence controller 2 now is capable of executing sequence processing. Henceforth, in accordance with the control program, the CPU 202f reads the sequence program instructions successively out of the RAM 202c one instruction at a time, executes sequence processing from the first to the last instructions of the sequence program and then returns to the first instruction to repeat the cycle. Thus the PSC 2 steps through the sequence program in repetitive fashion.

Now assume that a command such as the command M03 for forward spindle rotation is issued by the numerical control device 101. When this takes place, with reference being had to Fig. 4, logical "1" is written into the data memory 202a in the first bit of the 66th address where the M-function is to be stored, in the first bit of the 67th address where the M-code signal M11 is to be stored, and in the second bit of the 67th address where the M-code signal M12 is to be stored.

Since the central processing 202f is executing sequence processing by repeatedly stepping through the sequence program cyclically and reading out the instructions thereof in consecutive fashion, logical "1" will be stored in the fifth bit of the 20th address of data memory 202a when the groups of instructions (1), (2) in the sequence program (Fig. 3) have been executed. Thereafter, the status (SPCW = "1") of the fifth bit at the 20th address is stored in, say, FF $L_i$ of the data output circuit DO (Fig. 5) and delivered to the machine tool 3 through the driver $D_i$ and cable $I_{2i}$. This item of data places the relay $R_i$ of the machine tool 3 in the ON state so that the spindle of the machine tool is rotated in the forward direction. Now assume that, say, the relay contact RC1 on the machine tool side closes (i.e., assumes the ON state) during forward rotation of the spindle, thereby indicating completion of the rotation operation. As a result, a forward rotation end signal (logical "1") from the machine tool side, which signal is produced by closure of the relay contact $RC_i$, is stored in a prescribed bit of the data memory 202a (Fig. 1) through the cable $I_{1i}$, receiver $R_i$, AND gate $G_i$ and data bus DBUS. Sequence programming then continues and the numerical control device 1 is informed of completion of the forward rotation operation. This ends the sequence step for forward rotation of the spindle.

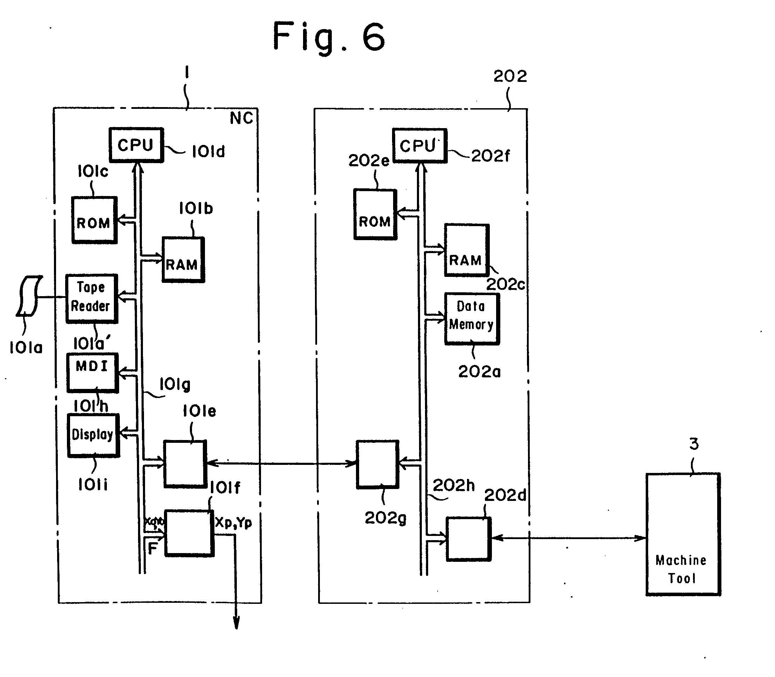

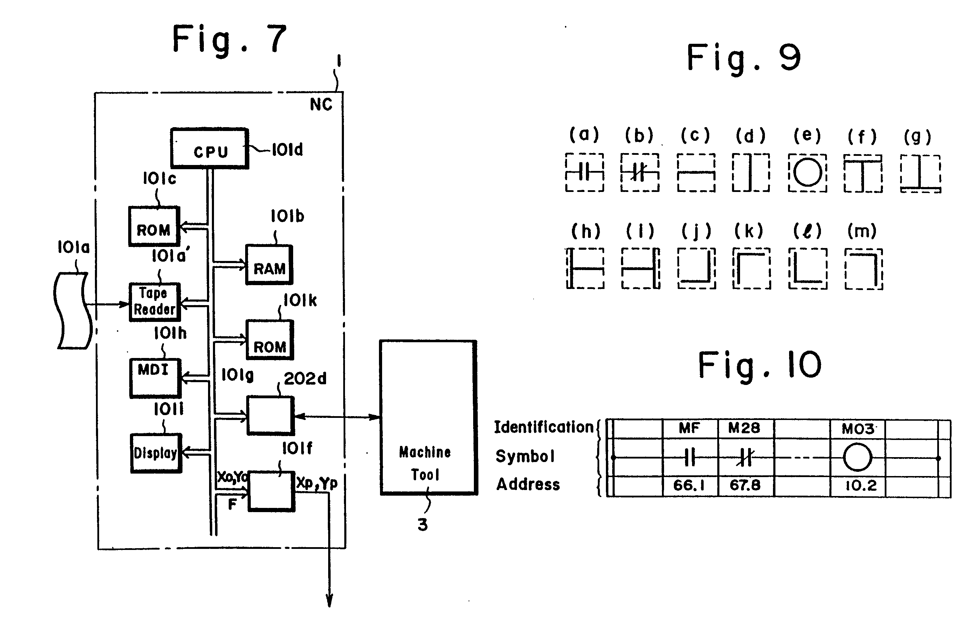

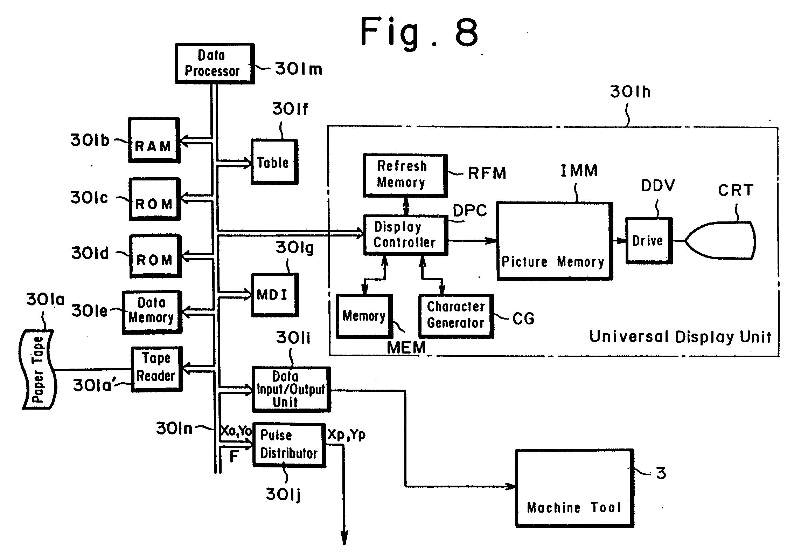

In the case described above the PSC 2 is provided with the programmer 201. An arrangement as shown in Fig. 6 is possible, however, in which the programmer 201 and transceiver unit 202b are deleted, a sequence program already converted into machine language is read in from the numerical control device 1 by reading means (such as the paper tape reader 101a') and is stored in the RAM 202c through the transceiver units 101e and 202g. In place of the RAM 202c, moreover, it is possible to use a ROM for storing a sequence program comprising machine language. Furthermore, while the numerical control device 1 and PSC 2 are shown to be provided separately in Figs. 1 and 6, these can be integrated into a single unit and made to share the same processor, as illustrated in Fig. 7. In Fig. 7, portions similar to those shown in Fig. 1 are designated by like reference characters. Numeral 101k denotes the abovementioned ROM for storing the sequence program expressed in machine language.

The numerical control system having the construction shown in Figs. 1, 6 and 7 is capable of displaying a ladder diagram on the universal display unit 101i in order to facilitate sequence program debugging and maintenance processing. When displaying a ladder diagram in accordance with the prior-art method, however, the display unit does nothing more than display the relays of the ladder diagram and the memory locations at which the relay states ("1" or "0") are stored. This makes it difficult to understand the sequence processing performed by the programmable sequence controller.

US—A—3 964 026 discloses a method of displaying a ladder diagram in accordance with the precharacterising part of claim 1.

According to one aspect of the invention there is provided a method of displaying a ladder diagram in a numerical control system having a programmable sequence control function in which sequence processing is executed based on a sequence program to deliver commands from numerical control means to a machine and signals from the machine to the numerical control means, as well as a function for displaying the sequence program in the form of a ladder diagram comprising at least relays, characterised by the steps of:

displaying the ladder diagram with storage locations of a data memory at each of which an operating state of a respective relay is stored, each storage location appearing in the vicinity of the relay corresponding thereto;

storing in memory a corresponding relationship between each storage location at which the operating state of a respective relay is stored, and an identification of said relay;

displaying the ladder diagram based on the sequence program and obtaining an identification of a relay by using the corresponding relationships and storage locations which are operands of respective instructions constituting the sequence program; and

displaying the ladder diagram with the obtained relay identification appearing in the vicinity of the corresponding relay.

According to another aspect of the invention there is provided an apparatus for displaying a ladder diagram in a numerical control system having a programmable sequence control function in which sequence processing is executed based on a sequence program to deliver commands from numerical control means to a machine and signals from the machine to the numerical control means, as well as a function for displaying the sequence program in the form of a ladder diagram comprising at least relays, characterised in that the apparatus is operable to display the ladder diagram with storage locations of a data memory at each of which an operating state of a respective relay is stored, each storage location appearing in the vicinity of the relay corresponding thereto, and in that said apparatus comprises:

(a) a first memory storing the sequence program;

(b) a second memory for storing a corresponding relationship between each storage location at which the operating state of a respective relay is stored, and an identification of said relay;

(c) means for retrieving an identification of a relay by using the corresponding relationships and said storage locations which are operands of instructions constituting the sequence program; and

(d) display means for displaying a ladder diagram based on the sequence program and for displaying, in the vicinity of a corresponding relay, the retrieved relay identification and the storage location at which the operating state of said relay is stored.

Related subject-matter is claimed in the copending patents EP—A—89194 and 89193.

An embodiment of the present invention may provide a method and apparatus for displaying a ladder diagram, wherein sequence processing is made easier to understand and both debugging and maintenance are greatly facilitated.

An embodiment of the present invention may provide a method and apparatus for displaying a ladder diagram in a numerical control system wherein it is possible to display not only the state of a relay but also the identification of the relay.

In an embodiment of the invention, corresponding relationships may be established between data memory locations storing the states (logical "1" or logical "0") of the relays, and the identifications of the relays. The corresponding relationships are stored in memory. Then, by using these corresponding relationships, the identification of a desired relay may be found and displayed along with the relay, the identification appearing in the vicinity of the relay.

BRIEF DESCRIPTION OF THE DRAWINGS

Fig. 1 is a block diagram of an example of a programmable sequence controller according to the prior art;

Fig. 2 shows a ladder diagram of the type associated with magnetics circuitry;

Fig. 3 illustrates an example of a sequence program;

Fig. 4 is an explanatory view showing the corresponding relationship between symbols and storage locations in a memory;

Fig. 5 is a block diagram of a data input/output unit included in the programmable sequence controller shown in Fig. 1;

Figs. 6 and 7 are block diagrams illustrating examples of numerical control systems which include a programmable sequence control function;

Fig. 8 is a block diagram of a numerical control system for practicing a ladder diagram display method according to an embodiment of the present invention;

Fig. 9 is an explanatory view of symbolic patterns stored in a character generator included in the system of Fig. 8; and

Fig. 10 is an explanatory view showing an example of a display presented on the screen of a CRT included in the system of Fig. 8.

In accordance with the present embodiment of the invention, corresponding relationships are established between data memory locations storing the states (logical "1" or logical "0") of relays, and the identifications of the relays. The corresponding relationships are stored in memory. Then, by using these corresponding relationships, the identification of a desired relay is found and is displayed along with the relay, the identification appearing in the vicinity of the relay.

Reference will now be had to Fig. 8 showing a block diagram of a numerical control system for practicing a method of displaying a ladder diagram according to the present invention. The system includes a numerical control tape 301a bearing machining commands in punched form, a tape reader 301a' for reading in the NC data from the tape 301a, a RAM 301b for storing the NC data read in by the tape reader 301a', a ROM 301c for storing a control program, a ROM 301d for storing a sequence program expressed in machine language, a data memory 301e comprising a RAM for storing the results of numerical control processing and of sequence processing, and a table 301f for storing the corresponding relationships between relay identifications (symbols) written on a ladder diagram and locations (address and bit position) of the data memory 301e storing the logical state ("1" or "0") of the relays. Also include are a manual data input device (MDI) 301 g, a universal display unit 301h, and a data input/output unit 301i for supervising the input and output of data with the machine tool 3. It should be noted that the data input/output unit 301i is structurally similar to the data input/output unit 202d shown in Fig. 5. Further provided is a pulse distributor 301j which receives as inputs thereto signals indicative of amounts of movement $X_o$, $Y_o$ along the X and Y axes, respectively, and a signal indicative of feed speed F, for producing distributed pulses $X_p$, $Y_p$ by performing a well-known arithmetic pulse distribution operation based on these signal inputs. All of the foregoing units are under the control of a data processing unit 301m, and all units are interconnected by a bus line 301n.

The universal display unit 301h comprises a display controller DPC, a refresh memory RFM connected to the display controller DPC for storing the sequence program data transferred from the ROM 301d following its conversion into picture information by the display controller DPC, a memory MEM for storing the corresponding relationships transferred from the table 301f, a character generator CG for storing various alphanumeric characters and symbolic patterns illustrative of a ladder diagram, a picture memory IMM for successively storing items of picture data generated by the character generator CG based on the picture information, whereby all picture information for displaying a single frame is stored, and a drive DDV which receives the picture information output of the picture memory IMM for driving a cathode ray tube CRT on the basis of the received information, whereby the CRT will display the stored picture.

As mentioned above, the character generator CG stores not only alphanumeric patterns but also symbols for displaying ladder diagrams.

Examples of these symbols are as shown in Fig. 9, in which (a) is a symbol indicating a normally open relay contact, (b) a symbol indicating a normally closed relay contact, and so on through (m). Fig. 10 is an enlarged view of a segment of a ladder diagram when displayed on the screen of the cathode ray tube CRT.

When a request signal for display of a ladder diagram is entered by an input device such as the operator's panel (not shown) or manual input device 301g, the data processing unit 301m transfers the corresponding relationships from table 301f to the memory MEM of the universal display unit 301h and then sends the sequence program data from the ROM 301d to the display side in sequential fashion. The unit of data delivered at one time comprises, say, the operation codes RD through WRT, as illustrated in Fig. 3. Upon receiving the sequence program data from the ROM 301d, the display controller DPC edits the data into picture information under the control of an editing program stored within the controller. For example, as shown in Fig. 10, the display controller DPC is adapted to divide one line into an identification display area, a symbolic display area and an address display area and to generate picture information for each display area so that one line of picture information will be made up of the picture information in the three display areas. The corresponding relationships stored in the memory MEM are used in generating the picture information for the identification display area. All picture information created by the display controller DPC is stored in the refresh memory RFM. Thereafter, the display controller DPC reads each item of picture information out of the refresh memory RFM in succession, reads the patterns corresponding to the picture information out of the character generator CG and stores the patterns in the picture memory IMM. Through these operations, ladder diagram segments are displayed on the cathode ray tube CRT.

In accordance with the present embodiment of the invention as described and illustrated hereinabove, the identification of a relay is displayed along with the relay symbol and memory location storing the state of the relay, thereby facilitating an understanding of sequence processing and simplifying debugging and maintenance.

As many apparently widely different embodiments of the present invention can be made without departing from the spirit and scope thereof, it is to be understood that the invention is not limited to the specific embodiments thereof except as defined in the appended claims.

There has been disclosed an apparatus for displaying a ladder diagram in a numerical control system having a programmable sequence controller function in which sequence processing is executed based on a sequence program to deliver commands from a numerical control device to a machine and signals from the machine to the numerical control device, as well as a function for displaying the sequence program in the form of a ladder diagram composed of at least relays, and for displaying storage locations of a data memory at each of which an operating state of a respective relay is stored, each storage location appearing in the vicinity of the relay corresponding thereto. Corresponding relationships are established between data memory locations storing the states (logical "1" or logical "0") of relays, and the identification of the relays. The corresponding relationships are stored in memory. Then, by using these corresponding relationships, the identification of a desired relay is found and is displayed along with the relay, the identification appearing in the vicinity of the relay.

## Claims

1. A method of displaying a ladder diagram in a numerical control system having a programmable sequence control function in which sequence processing is executed based on a sequence program to deliver commands from numerical control means to a machine and signals from the machine to the numerical control means, as well as a function for displaying the sequence program in the form of a ladder diagram comprising at least relays, characterised by the steps of:
   displaying the ladder diagram with storage locations of a data memory at each of which an operating state of a respective relay is stored, each storage location appearing in the vicinity of the relay corresponding thereto;
   storing in memory a corresponding relationship between each storage location at which the operating state of a respective relay is stored, and an identification of said relay;
   displaying the ladder diagram based on the sequence program and obtaining an identification of a relay by using the corresponding relationships and storage locations which are operands of respective instructions constituting the sequence program; and
   displaying the ladder diagram with the obtained relay identification appearing in the vicinity of the corresponding relay.

2. The method according to claim 1, in which the operating state of a relay is represented by one-bit logic of "1" or "0".

3. The method according to claim 2, in which a storage location is specified by an address and a bit position.

4. An apparatus for displaying a ladder diagram in a numerical control system having a programmable sequence control function in which sequence processing is executed based on a sequence program to deliver commands from numerical control means to a machine and signals from the machine to the numerical control means, as well as a function for displaying the sequence program in the form of a ladder diagram comprising at least relays, characterised in that the apparatus is operable to display the ladder diagram with storage locations of a data memory at each of which an operating state of a respective relay is stored, each storage location appearing in the vicinity of the relay corresponding thereto, and in that said apparatus comprises:

(a) a first memory storing the sequence program;

(b) a second memory for storing a corresponding relationship between each storage location at which the operating state of a respective relay is stored, and an identification of said relay;

(c) means for retrieving an identification of a relay by using the corresponding relationships and said storage locations which are operands of instructions constituting the sequence program; and

(d) display means for displaying a ladder diagram based on the sequence program and for displaying, in the vicinity of a corresponding relay, the retrieved relay identification and the storage location at which the operating state of said relay is stored.

5. The apparatus according to claim 4, in which said display means has means for dividing one line into an identification display area, a symbolic display area and an address display area and for generating picture information for each display area, one line of picture information being made up of the picture information in the three display areas.

**Patentansprüche**

1. Verfahren zum Anzeigen eines Leiterdiagramms in einem numerischen Steuersystem, das sowohl eine programmierbare Folge-Steuerfunktion hat, in welcher Folge eine Verarbeitung auf der Grundlage eines Folge-Programms ausgeführt wird, um Befehle von einem numerischen Steuermittel an eine Maschine und Signale von der Maschine an das numerische Steuermittel zu liefern, als auch eine Funktion zum Anzeigen des Folge-Programms in Form eines Leiterdiagramms aufweist, das zumindest Relaisfunktionen umfaßt, gekennzeichnet durch Schritte zum

Anzeigen des Leiterdiagramms mit Speicherplätzen eines Datenspeichers, wobei in jedem derselben ein Betriebszustand eines betreffenden Relais gespeichert ist und wobei jeder Speicherplatz in Nachbarschaft des ihm entsprechenden Relais erscheint,

Speichern in dem Speicher einer entsprechenden Beziehung zwischen jedem Speicherplatz, in dem der Betriebszustand eines betreffenden Relais gespeichert ist, und einer Kennung des Relais,

Anzeigen des Leiterdiagramms auf der Grundlage des Folge-Programms und Gewinnen einer Kennung eines Relais durch Benutzen der entsprechenden Beziehungen und Speicherplätze, welche Operanden betreffender Befehle sind, die das Folge-Programm bilden, und

Anzeigen des Leiterdiagramms mit den gewonnenen Relaiskennungen, die in Nachbarschaft des jeweils entsprechenden Relais erscheinen.

2. Verfahren nach Anspruch 1, bei dem der Betriebszustand eines Relais durch eine Ein-Bit-Logik mit den Binärwerten "1" und "0" dargestellt wird.

3. Verfahren nach Anspruch 2, bei dem ein Speicherplatz durch eine Adresse und eine Bitposition bestimmt ist.

4. Gerät zum Anzeigen eines Leiterdiagramms in einem numerischen Steuersystem, das sowohl eine programmierbare Folge-Steuerfunktion hat, in welcher Folge eine Verarbeitung auf der Grundlage eines Folge-Programms ausgeführt wird, um Befehle von einem numerischen Steuermittel an eine Maschine und Signale von der Maschine an das numerische Steuermittel zu liefern, als auch eine Funktion zum Anzeigen des Folge-Programms in Form eines Leiterdiagramms aufweist, das zumindest Relaisfunktionen umfaßt, dadurch gekennzeichnet, daß das Gerät betreibbar ist, um das Leiterdiagramm mit Speicherplätzen eines Datenspeichers anzuzeigen, wobei in jedem derselben ein Betriebszustand eines betreffenden Relais gespeichert ist und wobei jeder Speicherplatz in Nachbarschaft des diesem entsprechenden Relais erscheint, und daß das Gerät umfaßt:

(a) einen ersten Speicher, der das Folge-Programm speichert,

(b) einen zweiten Speicher zum Speichern einer entsprechenden Beziehung zwischen jedem Speicherplatz, in dem der Betriebszustand eines betreffenden Relais gespeichert ist, und einer Kennung des Relais,

(c) ein Mittel zum Abrufen einer Kennung eines Relais durch Benutzen der entsprechenden Beziehungen und der Speicherplätze, die Operanden von Befehlen sind, welche das Folge-Programm bilden, und

(d) ein Anzeigemittel zum Anzeigen eines Leiterdiagramms auf der Grundlage des Folge-Programms und zum Anzeigen der abgerufenen Relais-Kennung und des Speicherplatzes, in dem der Betriebszustand des Relais gespeichert ist, in Nachbarschaft dieses Relais.

5. Gerät nach Anspruch 4, bei dem das Anzeigemittel Mittel zum Unterteilen eine Zeile in einen Kennungs-Anzeigebereich, einen symbolischen Anzeigebereich und einen Adressen-Anzeigebereich und zum Erzeugen von Bildinformation für jeden Anzeigebereich aufweist, wobei jede Zeile von Bildinformation aus der Bildinformation in den drei Anzeigebereichen gebildet ist.

**Revendications**

1. Méthode pour afficher un diagramme en échelle dans un système de commande numérique comprenant une fonction de commande de séquence programmable dans laquelle le traitement séquentiel est exécuté sur la base d'un programme de séquence pour fournir des commandes à partir de moyens de commande numérique à une machine et des signaux de la machine aux moyens de commande numériques, de même qu'une fonction pour afficher le programme de séquence sous forme d'un diagramme en échelle comprenant au moins des relais, caractérisée par les étapes consistant à:

afficher le diagramme en échelle avec les emplacements de stockage d'une mémoire de données dans chacun desquels est stocké um état de fonctionnement d'un relais respectif, chaque emplacement de stockage apparaissant au voisinage du relais qui lui correspond;

stocker en mémoire une relation de correspondance entre chaque emplacement de stockage où est stocké l'état de fonctionnement d'un relais respectif, et une identification dudit relais;

afficher le diagramme en échelle sur la base du programme de séquence et obtenir une identification d'un relais en utilisant les relations de correspondance et les emplacements de mémoire qui sont des opérandes d'instructions respectives constituant le programme de séquence;

afficher le diagramme en échelle, l'identification de relais obtenue apparaissant au voisinage du relais correspondant.

2. Méthode selon la revendication 1, dans laquelle l'état de fonctionnement d'un relais est représenté par une valeur logique d'un bit "1" ou "0".

3. Méthode selon la revendication 2, dans laquelle un emplacement de stockage est spécifié par une adresse et une position de bit.

4. Dispositif pour afficher un diagramme en échelle dans un système de commande numérique comprenant une fonction de commande de séquence programmable, dans lequel le traitement de séquence est exécuté sur la base d'un programme de séquence pour fournir des instructions provenant de moyens de commande numériques à une machine et de signaux provenant de la machine aux moyens de commande numériques, de même qu'une fonction pour afficher le programme de séquence sous la forme d'un diagramme en échelle comprenant au moins des relais, caractérisé en ce que le dispositif est adapté à afficher le diagramme en échelle avec les emplacements de stockage d'une mémoire de données dans chacun desquels est stocké un état de fonctionnement d'un relais respectif, chaque emplacement de stockage apparaissant au voisinage du relais qui lui correspond, et en ce que ledit dispositif comprend:

(a) une première mémoire stockant le programme de séquence;

(b) une seconde mémoire pour stocker une relation de correspondance entre chaque emplacement de stockage dans lequel est stocké l'état de fonctionnement d'un relais respectif, et une identification dudit relais;

(c) des moyens pour récupérer une identification d'un relais en utilisant les relations de correspondance entre lesdits emplacements de stockage qui sont des opérandes d'instructions constituant le programme de séquence; et

(d) des moyens d'affichage pour afficher un diagramme en échelle basé sur le programme de séquence et pour afficher, au voisinage d'un relais correspondant, l'identification du relais récupéré et l'emplacement de stockage dans lequel est stocké l'état de fonctionnement dudit relais.

5. Dispositif selon la revendication 4, dans lequel lesdits moyens d'affichage comprennent des moyens pour diviser une ligne en une région d'affichage d'identification, une région d'affichage de symboles et une région d'affichage d'adresses et pour générer une information d'image pour chaque région d'affichage, une ligne d'information d'image étant constituée par l'information d'image dans les trois régions d'affichage.

# Fig. 1

Fig. 1

EP 0 092 312 B1

# Fig. 2

| | MF | M28 | M24 | M22 | M21 | M18 | M14 | M12 | MII | | |
| 66.1 | 67.8 | 67.7 | 67.6 | 67.5 | 67.4 | 67.3 | 67.2 | 67.1 | (M03) 10.2 | M03 |

| AUT | M03 | SPCCW | | (SPCW) |
| 10.1 | 10.2 | 10.3 | | 20.5 |

| HSM | READY | CRM | | (CRA) |
| 11.1 | 20.1 | 20.2 | | 42.2 |

J.M 11.2

MAN 11.3

# Fig. 3

| Operation Code | Operand | |
|---|---|---|
| RD | MF | |
| AND.NOT | M 28 | |
| AND.NOT | M 24 | |
| AND.NOT | M 22 | |
| AND.NOT | M 21 | ① |
| AND.NOT | M 18 | |
| AND.NOT | M 14 | |
| AND | M 12 | |
| AND | M II | |
| WRT | M 03 | |
| RD | AUT | |
| AND | M 03 | ② |
| AND.NOT | SPCCW | |
| WRT | SPCW | |
| RD | HS·M | |
| OR | J·M | |
| OR | MAN | |
| AND | READY | |
| AND.NOT | CRH | |
| WRT | CRA | |

# Fig. 4

| Symbol | Data Memory Address and Bit | Symbol | Data Memory Address and Bit |
|---|---|---|---|
| AUT | 10.1 | MF | 66.1 |
| M 03 | 10.2 | M 28 | 67.8 |
| SPCCW | 10.3 | M 24 | 67.7 |
| SPCW | 20.5 | M 22 | 67.6 |
| | | M 21 | 67.5 |
| | | M 18 | 67.4 |
| HS.M | 11.1 | M 14 | 67.3 |
| J.M | 11.2 | M 12 | 67.2 |
| MAN | 11.3 | M II | 67.1 |
| READY | 20.1 | | |
| CRH | 20.2 | | |
| CRA | 42.2 | | |

# Fig. 5

Fig. 6

4

# Fig. 7

# Fig. 9

(a) (b) (c) (d) (e) (f) (g)

(h) (l) (j) (k) (ℓ) (m)

# Fig. 10

| Identification | | MF | M28 | | | MO3 | |
|---|---|---|---|---|---|---|---|
| Symbol | | ⊣⊢ | ⊣/⊢ | ‑‑‑ | | ◯ | |
| Address | | 66.1 | 67.8 | | | 10.2 | |

EP 0 092 312 B1

# Fig. 8

Universal Display Unit — 30lh

RFM — Refresh Memory
DPC — Display Controller
IMM — Picture Memory
CG — Character Generator
MEM — Memory
DDV — Drive
CRT

Data Processor — 30lm
Table — 30lf
RAM — 30lb
ROM — 30lc
ROM — 30ld
Data Memory — 30le
Tape Reader — 30la'
Paper Tape — 30la
MDI — 30lg
Data Input/Output Unit — 30li
Pulse Distributor — 30lj
Xp,Yp
Xo,Yo
F
30ln
Machine Tool — 3

6